# EUROPÄISCHE PATENTSCHRIFT

(11) **EP 2 998 280 B1**
(45) Veröffentlichungstag und Bekanntmachung des Hinweises auf die Patenterteilung: **05.04.2017**
(21) Anmeldenummer: 14185384.6
(22) Anmeldetag: 18.09.2014
(51) Int. Cl.: C04B 2/10, C04B 20/04, C04B 7/02, F27B 7/20, F27B 7/38, F27B 9/34, F23M 5/00, F27B 7/00, F27B 7/02, C04B 18/16, C04B 35/626, C04B 35/66

(54) **Verfahren zur Behandlung von kohlenstoffhaltigen feuerfesten Erzeugnissen sowie eine Vorrichtung zur Behandlung von solchen Erzeugnissen**
Method for the treatment of carbonaceous refractory products and device for handling such products
Procédé de traitement de produits réfractaires contenant du carbone et dispositif de traitement de tels produits

(43) Veröffentlichungstag der Anmeldung: 23.03.2016
(73) Patentinhaber: Refractory Intellectual Property GmbH & Co. KG, 1100 Wien (AT)
(72) Erfinder: Heid, Stefan, 8700 Leoben (AT); Wurzer, Gerhard, 8700 Leoben (AT); Rief, Andreas, 8700 Leoben (AT)
(74) Vertreter: Berkenbrink, Kai-Oliver

(56) Entgegenhaltungen:
- EP-A1- 1 085 282
- WO-A1-88/02284
- G.Bickley Remmey, Jr.: "Firing Ceramics; Advance Series in Ceramics-Vol. 2", 1. Januar 1994 (1994-01-01), World Scientific Publishing Co. Pte. Ltd., Singapore, XP002731845, ISBN: 9810216785 Seiten 14-15, * "Section 2.1"; "combustibles" *
- J.D.SMITH ET.AL.: "Characterisation and recycling of spent refractory wastes from metal manufacturers in Missouri", RESOURCES, CONSERVATION AND RECYCLING, Bd. 25, 1. Januar 1999 (1999-01-01), Seiten 151-169, XP002731846, USA
- A.N.CONEJO ET. AL.: "Recycling MgO-C refractory in electric arc furnaces", RESOURCES, CONSERVATION AND RECYCLING, Bd. 49, 1. Januar 1996 (1996-01-01), Seiten 14-31, XP002731847, Mexico
- VIKLUND-WHITE ET AL: "Spend ladle refractories - characterisation and reuse in new refractory materials", STAHL UND EISEN SPECIAL,, 1. September 2001 (2001-09-01), Seiten 86-91, XP009158446,
- G.F. MELO ET. AL: "A case study of air enrichement in rotary kiln incineration", INT.COMM. HEAT MASS TRANSFER, Bd. 25, Nr. 5, 1. Januar 1998 (1998-01-01) , Seiten 681-692, XP002731848,

## Beschreibung

Die Erfindung betrifft ein Verfahren zur Behandlung von kohlenstoffhaltigen feuerfesten Erzeugnissen sowie eine Vorrichtung zur Behandlung von kohlenstoffhaltigen feuerfesten Erzeugnissen.

Kohlenstoffhaltige feuerfeste Erzeugnisse sind insbesondere in Form von Magnesia-Kohlenstoff-Steinen, sogenannten "MgO-C-Steinen", oder in Form von Alumina-Magnesia-Kohlenstoff-Steinen, sogenannten "AMC-Steinen" verbreitet. Entsprechende kohlenstoffhaltige feuerfeste Erzeugnisse werden insbesondere in Aggregaten zur Aufnahme von Stahlschmelzen verwendet, beispielsweise in Pfannen oder Konvertern von Stahlwerken sowie in Elektrolichtbogenöfen.

Entsprechend ausgebildete Erzeugnisse weisen als Hauptbestandteil Magnesia (MgO) und Alumina (Al₂O₃) sowie Kohlenstoff (C) auf, letzteren in Anteilen von 1 bis 30 Masse-%, typischerweise von 5 bis 15 Masse-%. Daneben können in geringen Anteilen Bestandteile in Form von Antioxidantien vorliegen, beispielsweise in Form von metallischem Aluminium oder Silicium.

Während des Einsatzes solch kohlenstoffhaltiger feuerfester Erzeugnisse können die Bestandteile der Erzeugnisse Reaktionen miteinander eingehen, in deren Verlauf es beispielsweise zur Entstehung von Aluminiumcarbid (Al₄C₃) oder Aluminiumnitrid (AlN) kommen kann.

Nach ihrer gewünschten Einsatzdauer werden die gebrauchten kohlenstoffhaltigen feuerfesten Erzeugnisse aus ihrem jeweiligen Einsatzort ausgebrochen und als solch sogenanntes Ausbruchmaterial aus Gründen der Ressourcenschonung sowie aus Kostengründen möglichst einer weiteren Verwendung zugeführt. Dabei ist es grundsätzlich bereits bekannt, solches Ausbruchmaterial Versätzen zur Herstellung von feuerfesten Erzeugnissen zuzugeben. Allerdings ist die Höchstmenge, in der solches Ausbruchmaterial feuerfesten Versätzen zugegeben werden kann, sehr begrenzt. Denn die in dem Ausbruchmaterial vorhandenen Anteile an Kohlenstoff sowie sonstigen oxidierbaren Bestandteilen können die Eigenschaften eines feuerfesten Erzeugnisses, das auf Basis eines Versatzes erstellt ist, der solches Ausbruchmaterial umfasst, verschlechtern. Insbesondere bei einer Hydratisierung dieser oxidierbaren Bestandteile bei der Recyclierung eines solchen Erzeugnisses kann es zu dessen Beschädigung führen.

Grundsätzlich wäre es daher wünschenswert, Ausbruchmaterial auf Basis von kohlenstoffhaltigen feuerfesten Erzeugnissen zur Verfügung stellen zu können, das in größeren Mengenanteilen als Komponente für Versätze zur Herstellung von feuerfesten Erzeugnissen verwendbar ist.

Vor diesem Hintergrund liegt der vorliegenden Erfindung die Aufgabe zugrunde, ein Verfahren zur Behandlung von kohlenstoffhaltigen feuerfesten Erzeugnissen, insbesondere in Form von Ausbruchmaterial, zur Verfügung zu stellen, durch das kohlenstoffhaltige feuerfeste Erzeugnisse derart behandelbar sind, dass das nach Durchführung des Verfahrens erhaltene Produkt in größeren Anteilen als Komponente eines Versatzes zur Herstellung von feuerfesten Erzeugnissen verwendet werden kann, als dies mit Ausbruchmaterialien nach dem Stand der Technik möglich ist.

Zur Lösung dieser Aufgabe wird erfindungsgemäß zur Verfügung gestellt ein Verfahren zur Behandlung von kohlenstoffhaltigen feuerfesten Erzeugnissen mit folgenden Merkmalen:
Zur Verfügungstellung von kohlenstoffhaltigen feuerfesten Erzeugnissen in Form von Schüttgut;
Zuführen des Schüttgutes in einen Drehrohrofen;
Beaufschlagen des Schüttgutes im Drehrohrofen mit Temperatur und einem sauerstoffhaltigen Gas derart, dass es zumindest zu einer teilweisen Oxidation von in dem Schüttgut enthaltenden, oxidierbaren Bestandteilen kommt;
Ausführen des Schüttgutes aus dem Drehrohrofen.

Überraschend hat sich erfindungsgemäß herausgestellt, dass durch die Behandlung von kohlenstoffhaltigen feuerfesten Erzeugnissen, welche Antioxidantien, beispielsweise in Form von metallischem Silizium oder Aluminium oder deren Umsetzungsprodukten (Carbide und Nitride), enthalten, mit dem vorstehenden Verfahren ein Produkt herstellbar ist, das in hervorragender Weise als Komponente eines Versatzes zur Herstellung von feuerfesten Erzeugnissen verwendbar ist, und zwar auch in Anteilen, die deutlich über den Anteilen liegen, in denen solches Ausbruchmaterial nach dem Stand der Technik in solchen Versätzen verwendbar ist.

Beispielsweise lässt sich durch Behandlung von Ausbruchmaterial mit dem erfindungsgemäßen Verfahren auch ein Produkt beziehungsweise Rohstoff herstellen, der die Qualität eines originären Rohstoffes zur Herstellung eines kohlenstoffhaltigen feuerfesten Erzeugnisses, insbesondere in Form eines MgO-C-Steines oder eines AMC-Steines, aufweist.

Grundsätzlich kann das erfindungsgemäße Verfahren zur Behandlung von beliebigen kohlenstoffhaltigen feuerfesten Erzeugnissen verwendet werden, insbesondere zur Verwendung von gebrauchten kohlenstoffhaltigen feuerfesten Erzeugnissen, insbesondere in Form von Ausbruchmaterial. Insoweit kann es sich bei den kohlenstoffhaltigen feuerfesten Erzeugnissen beispielsweise um wenigstens eines der folgenden Erzeugnisse handeln: MgO-C-Steine oder AMC-Steine.

Das erfindungsgemäße Verfahren kann zur Behandlung von kohlenstoffhaltigen feuerfesten Erzeugnissen verwendet werden, die neben Kohlenstoff wenigstens einen der folgenden, oxidierbaren Bestandteile enthalten: wenigstens ein Metall, wenigstens ein Carbid, wenigstens ein Nitrid oder wenigstens ein Carbonitrid. Bei dem wenigstens einem Metall kann es sich beispielsweise um wenigstens eines der folgenden Metalle handeln: metallisches Aluminium oder metallisches Silicium. Bei dem wenigstens einem Carbid kann es sich beispielsweise um Aluminiumcarbid (Al₄C₃) handeln. Bei dem wenigstens einem Nitrid kann es sich beispielsweise um Aluminiumnitrid (AlN) handeln.

Der Gehalt an oxidierbaren Bestandteilen, insbesondere an den vorbezeichneten oxidierbaren Bestandteilen sowie an Kohlenstoff im Schüttgut kann jeweils in den Anteilen im Schüttgut enthalten sein, die gebrauchte kohlenstoffhaltige feuerfeste Erzeugnisse in Form von Ausbruchmaterial typischerweise an diesen Substanzen aufweisen. Insoweit können oxidierbare Bestandteile, die nicht in Form von Kohlenstoff im Schüttgut vorliegen, also insbesondere die vorbezeichnenten oxidierbaren Bestandteile in Form von Metallen, Carbiden, Nitriden oder Carbonitriden, im Schüttgut beispielsweise in Anteilen im Bereich von 0,1 bis 8 Masse-% enthalten sein, also beispielsweise auch in Anteilen von wenigstens 0,2 Masse-%, 0,5 Masse-% oder 1 Masse-% und beispielsweise auch in Anteilen von höchstens 7, 6 oder 5 Masse-%. Der Kohlenstoffgehalt des Schüttgutes kann beispielsweise im Bereich von 1 bis 30 Masse-% liegen, insbesondere beispielweise im Bereich von 5 bis 15 Masse-%. Im übrigen kann das Schüttgut aus den Grundmaterialien bestehen, die gebrauchte kohlenstoffhaltige feuerfeste Erzeugnisse in Form von Ausbruchmaterial typischerweise aufweisen, insbesondere einem oder mehreren Grundmaterialien auf Basis Magnesia (MgO) oder Alumina (Al₂O₃). Beispielsweise kann das Schüttgut zu 70 bis 98 Masse-% wenigstens eines der folgenden Grundmaterialen aufweisen: Magnesia (beispielsweise Sintermagnesia und/oder Schmelzmagnesia), Korund (beispielsweise Sinterkorund und/oder Schmelzkorund) oder Spinell (Magnesia-Spinell); beispielsweise kann das Schüttgut diese Grundmaterialien auch zu wenigstens 75, 80 oder 85 Masse-% und beispielsweise auch zu höchstens 97, 96, 95 oder 94 Masse-% aufweisen.

Beispielsweise kann das Schüttgut zu 70 bis 98 Masse-% aus wenigstens einem der folgenden Oxide bestehen: MgO oder Al₂O₃; beispielsweise kann das Schüttgut auch zu wenigstens 75, 80 oder 85 Masse-% und beispielsweise auch zu höchstens 97, 96, 95, 94, 93, 92, 91 oder 90 Masse-% aus diesen Oxiden bestehen. Die hierin gemachten Angaben in Masse-% beziehen sich auf die Masse der jeweiligen Komponente in Bezug auf die Gesamtmasse des Schüttgutes, sowie im Einzelfall nicht anders angegeben.

Zur Durchführung des erfindungsgemäßen Verfahrens werden solch kohlenstoffhaltige feuerfeste Erzeugnisse in Form von Schüttgut zur Verfügung gestellt, also in Form eines körnigen oder stückigen Gemenges, das in einer schüttfähigen Form vorliegt. Bevorzugt liegt das Schüttgut in einer möglichst geringen Korngröße vor, so dass das Schüttgut eine große Oberfläche aufweist, damit besonders reaktiv ist und hierdurch die oxidierbaren Bestandteile des Schüttgutes während der Durchführung des Verfahrens besonders gut oxidiert werden können. Bevorzugt kann vorgesehen sein, dass das kohlenstoffhaltige feuerfeste Erzeugnis derart in Form von Schüttgut zur Verfügung gestellt wird, dass dieses zu wenigstens 80 Masse-% in einer Korngröße unter 20 mm vorliegt, also beispielsweise auch zu wenigstens 90 oder 95 Masse-% in einer Korngröße unter 20 mm. Nach einer Fortführung dieses Erfindungsgedankens kann vorgesehen sein, dass das Schüttgut auch zu wenigstens 80, 90 oder 95 Masse-% in einer Korngröße unter 15, 10, 9, 8, 7 oder 6 mm zur Verfügung gestellt wird.

Das in solcher Form als Schüttgut vorliegende kohlenstoffhaltige feuerfeste Erzeugnis wird dem Drehrohrofen anschließend zugeführt.

Besondere Bedeutung bei dem erfindungsgemäßen Verfahren kommt der Behandlung des kohlenstoffhaltigen feuerfesten Erzeugnisses im Drehrohrofen zu. Erfindungsgemäß wird dabei das Schüttgut im Drehrohrofen mit Temperatur und einem sauerstoffhaltigen Gas beaufschlagt, so dass es zumindest zu einer teilweisen Oxidation von in dem Schüttgut enthaltenden, oxidierbaren Bestandteilen kommt. Bevorzugt kann dabei vorgesehen sein, dass das Schüttgut im Drehrohrofen mit Temperaturen im Bereich von 500 bis 1.600 °C beaufschlagt wird, besonders bevorzugt bei Temperaturen von wenigstens 500, 550, 500, 650, 700, 750, 800, 850, 900, 950, 1.000, 1.050, 1.100, 1.150 oder 1.200 °C und ferner besonders bevorzugt bei Temperaturen von höchstens 1.550, 1.500, 1.450 oder 1.400 °C. Dabei kann bevorzugt vorgesehen sein, dass die Temperaturbeaufschlagung zumindest teilweise auch durch eine exotherme Reaktion von Bestandteilen des kohlenstoffhaltigen feuerfesten Erzeugnisses beziehungsweise des Schüttgutes hervorgerufen wird. Insoweit kann die Temperaturbeaufschlagung des kohlenstoffhaltigen feuerfesten Erzeugnisses im Drehrohrofen insbesondere auch durch eine exotherme Reaktion bei der Oxidation des Kohlenstoffs des kohlenstoffhaltigen feuerfesten Erzeugnisses hervorgerufen werden.

Die Beaufschlagung des Schüttgutes im Drehrohrofen mit Temperatur kann beispielsweise über Mittel zur Beaufschlagung des Drehrohrofens mit Temperatur erzeugt beziehungsweise initiiert werden. Bei diesen Mitteln kann es sich um beliebige aus dem Stand der Technik bekannte Mittel zur Beaufschlagung des Ofenraums eines Drehrohrofens mit Temperatur handeln, insbesondere beispielsweise Gas-, Öl- oder Mehrstoffbrenner. Soweit die Temperaturbeaufschlagung des im Drehrohrofen befindlichen Schüttgutes bei dem erfindungsgemäßen Verfahren, insbesondere im bevorzugten Temperaturbereich, durch eine exotherme Reaktion hervorgerufen wird, kann beispielsweise vorgesehen sein, dass der Ofenraum des Drehrohrofens nur mit Temperaturen in einem solchen Temperaturbereich beaufschlagt wird, durch die eine exotherme Reaktion von Bestandteilen des kohlenstoffhaltigen feuerfesten Erzeugnisses in Gang gesetzt wird, also beispielsweise insbesondere eine Oxidation des Kohlenstoffs des kohlenstoffhaltigen feuerfesten Erzeugnisses initiiert wird.

Der zur Ausführung des erfindungsgemäßen Verfahrens verwendete Drehrohrofen kann in seinem Grundaufbau gemäß den aus dem Stand der Technik bekannten Drehrohröfen ausgebildet sein. Ein Drehrohrofen umfasst bekanntermaßen einen rohrförmigen Metallmantel, der um seine leicht schräg zur Horizontalen verlaufende Mittenlängsachse drehbar ist. Innenseitig ist das Metallrohr mit einer feuerfesten Auskleidung zugestellt, die den Ofenraum umschließt. Am höherseitigen Ende des Drehrohrofens befindet sich der Einlauf, in den im Ofenraum zu behandelndes Gut in den Ofenraum eingegeben wird. Am unteren Ende des Drehrohrofens befindet sich der Auslauf, aus welchem im Ofenraum behandeltes Gut aus dem Ofenraum ausgeleitet wird. Durch Drehung des Drehrohrofens um seine Mittenlängsachse bewegt sich im Ofenraum befindliches Gut selbsttätig vom Einlauf zum Auslauf des Drehrohrofens.

Erfindungsgemäß kann vorgesehen sein, dass das Schüttgut im Drehrohrofen mit sauerstoffhaltigem Gas in Form von Sauerstoff beaufschlagt wird.

Grundsätzlich kann das Schüttgut im Drehrohrofen zwar mit einem beliebigen sauerstoffhaltigem Gas beaufschlagt werden, also beispielsweise auch mit Luft; erfindungsgemäß wurde jedoch festgestellt, dass sich die Oxidation von den im Schüttgut enthaltenen, oxidierbaren Bestandteilen wesentlich steigern lässt, falls das Schüttgut im Drehrohrofen mit Gas in Form von Sauerstoffgas beaufschlagt wird. Zur Beaufschlagung des Schüttgutes im Drehrohrofen mit sauerstoffhaltigem Gas, insbesondere mit Sauerstoffgas, kann vorgesehen sein, dass das Gas über Düsen in den Ofenraum eingebracht wird. Beispielsweise kann das sauerstoffhaltige Gas hierzu auch in prozesstechnisch mit dem Ofenraum gekoppelte Aggregate eingebracht werden, beispielsweise in einen dem Ofen nachgeschalteten Kühler, von wo das Gas in den Ofenraum weitergeleitet wird. Es kann vorgesehen sein, dass der Sauerstoffpartialdruck im Drehrohrofen beispielsweise im Bereich von 5 bis 30 Vol.-% liegt, also beispielsweise auch bei wenigstens 6, 7, 8, 9, 10 und beispielsweise auch bei höchstens 29, 28, 27, 26, 25, 24 oder 23 Vol.-%. Beispielsweise kann ferner vorgesehen sein, dass die Druckdifferenz im Ofen relativ zum Umgebungsdruck im Bereich von 0 bis -1,0 mbar liegt, also beispielsweise auch bei wenigstens -0,05 oder - 0,1 mbar und beispielsweise auch bei höchstens -0,9 oder -0,8 mbar.

Das Schüttgut wird im Drehrohrofen bevorzugt für eine solche Dauer mit Temperatur und Sauerstoff beaufschlagt, bis die oxidierbaren Bestandteile des Schüttgutes weitgehend oxidiert sind.

Insbesondere können beispielsweise die folgenden Oxidationsreaktionen während der Beaufschlagung des Schüttgutes mit Temperatur und sauerstoffhaltigem Gas im Drehrohrofen stattfinden:
soweit Kohlenstoff im Schüttgut vorhanden ist:

   C + O₂ → CO₂↑;
soweit metallisches Aluminium im Schüttgut enthalten ist:

   2 Al + 1,5 O₂ → Al₂O₃,
soweit metallisches Silicium im Schüttgut enthalten ist:

   Si + O₂ → SiO₂;
soweit Aluminiumnitrid im Schüttgut enthalten ist:

   2 AlN + 3,5 O₂ →Al₂O₃ + 2 NO₂↑;
soweit Aluminiumcarbid im Schüttgut enthalten ist:

   Al₄C₃ + 6 O₂ → 2 Al₂O₃ + 3 CO₂↑.

Das während der Behandlung des Schüttgutes im Drehrohrofen gebildete NO₂ und CO₂ wird dem Drehrohrofen als Abgas entzogen. Im Übrigen bildet sich aus den oxidierbaren Bestandteilen im wesentlichen Al₂O₃ und SiO₂.

Durch die Oxidierung der kohlenstoffhaltigen Bestandteile des Schüttgutes während seiner Behandlung im Drehrohrofen kann der Anteil an Kohlenstoff des erfindungsgemäß behandelten kohlenstoffhaltigen feuerfesten Erzeugnisses durch das erfindungsgemäße Verfahren erheblich reduziert werden. Beispielsweise kann der Anteil an Kohlenstoff in dem erfindungsgemäß behandelten kohlenstoffhaltigen feuerfesten Erzeugnis durch das Verfahren zu wenigstens 50 Masse-%, also beispielsweise auch zu wenigstens 60, 70, 80 oder 90 Masse-% reduziert werden, bezogen auf den Anteil an Kohlenstoff im Schüttgut nach der Durchführung des erfindungsgemäßen Verfahrens im Vergleich zu dem Schüttgut vor der Durchführung des Verfahrens. Beispielsweise kann der Anteil an Kohlenstoff in dem Schüttgut nach der Durchführung des erfindungsgemäßen Verfahrens unter 5 Masse-% liegen, bezogen auf die Gesamtmasse des Schüttgutes, also beispielsweise auch unter 4, 3, 2 oder 1 Masse-%.

Nach der Behandlung von kohlenstoffhaltigen feuerfesten Erzeugnissen in Form von MgO-C-Steinen oder AMC-Steinen durch das erfindungsgemäße Verfahren bestehen die erhaltenen Produkte demnach weitgehend aus MgO und Al₂O₃ beziehungsweise Spinell (MgO · Al₂O₃) mit nur sehr geringen Anteilen an oxidierbaren Bestandteilen. Solche Produkte lassen sich in hervorragender Weise als Rohstoff für einen Versatz zur Herstellung eines feuerfesten Erzeugnisses verwenden.

Es kann vorgesehen sein, dass das Schüttgut während der Beaufschlagung im Drehrohrofen mit Temperatur und einem sauerstoffhaltigem Gas gemischt und zerkleinert wird. Eine solche Durchmischung und Zerkleinerung des Schüttgutes kann in gewissem Maße bereits durch die Drehung des Drehrohrofens um seine Längsachse während der Behandlung des Schüttgutes im Drehrohrofen erreicht werden. Allerdings wurde erfindungsgemäß festgestellt, dass eine verbesserte Oxidation der oxidierbaren Bestandteile des Schüttgutes im Drehrohrofen erreicht werden kann, wenn das Schüttgut während seiner Behandlung im Drehrohrofen stärker zerkleinert wird als dies allein mit einer Durchmischung und Zerkleinerung durch die Rotation eines herkömmlichen Drehrohrofens mit einem im wesentlichen zylindrischen Ofenraum möglich ist. Erfindungsgemäß kann daher vorgesehen sein, dass der Ofenraum Mittel aufweist, durch die das Schüttgut während der Rotation des Drehrohrofens in besonderem Maße zerkleinert wird. Nach einer Ausführungsform kann vorgesehen sein, dass der Ofenraum Mittel in Form von Vorsprüngen aufweist, die in den Ofenraum ragen. Bei einer Rotation des Drehrohrofens führt dies dazu, dass das Schüttgut durch diese Vorsprünge kontinuierliche Fall- und Aufschlagbewegungen erfährt, die zu einer fortwährenden Zerkleinerung des Schüttgutes führen. Besonders bevorzugt können solche Vorsprünge beispielsweise in Form von Vorsprüngen, Wällen oder Schikanen vorliegen, die sich bevorzugt entlang der Wandung des Ofenraums in Ofenlängsrichtung erstrecken.

Durch eine Zerkleinerung des Schüttgutes während seiner Behandlung im Drehrohrofen kann ein Anteil des Schüttgutes zu einer Feinfraktion mit einer Korngröße zerkleinert werden, die sich teilweise nur schlecht als Rohstoff für Versätze zur Herstellung von feuerfesten Erzeugnissen verwenden lässt. Daher kann ein Verfahrensschritt der Fraktionierung vorgesehen sein, der sich an den Verfahrensschritt des Ausführens des Schüttgutes aus dem Drehrohrofen anschließt. Durch eine solche Fraktionierung kann das aus dem Drehrohrofen ausgeführte Schüttgut in eine Grobfraktion und eine Feinfraktion fraktioniert werden.

Erfindungsgemäß wurde festgestellt, dass sich Reste an oxidierbaren Bestandteilen, die nach Behandlung des Schüttgutes im Drehrohrofen in diesem verbleiben, insbesondere in den feinkörnigen Bestandteilen des Schüttgutes anreichern. Insofern kann eine Fraktionierung des Schüttgutes auch deshalb vorteilhaft sein, da sich durch diese die Feinfraktion, die höhere Reste an oxidierbaren Bestandteilen als die Grobfraktion aufweist, von der Grobfraktion trennen lässt.

Beispielsweise kann vorgesehen sein, dass die Korngrenze zwischen der Grobfraktion und der Feinfraktion bei einer Korngröße im Bereich zwischen 0,1 und 0,5 mm gezogen wird.

Es kann vorgesehen sein, dass das Schüttgut nach seiner Behandlung im Drehrohrofen - und vor einer etwaigen Fraktionierung - gekühlt wird. Hierzu kann das aus dem Drehrohrofen ausgeleitete Schüttgut beispielsweise in ein Aggregat geleitet werden, in dem das Schüttgut mit Luft gekühlt wird.

Nach einem Aspekt der Erfindung kann vorgesehen sein, dass das Schüttgut vor seiner Zuführung in den Drehrohrofen vorgewärmt wird. Die Vorwärmung kann beispielsweise mittels heißer, aus dem Drehrohrofen abgezogener Abgase durchgeführt werden, mittels derer das Schüttgut zur Vorwärmung beaufschlagt wird. Eine solche Vorwärmung hat zum einen den Vorteil der Energieersparnis, da das Schüttgut im Drehrohrofen zur Erzielung der gewünschten Temperatur mit weniger Temperatur beaufschlagt werden muss. Zum weiteren hat eine solche Vorwärmung den Vorteil einer Trocknung des Schüttgutes. Eine solche Vorwärmung kann beispielsweise in einem Drehrohrtrockner durchgeführt werden.

Erfindungsgemäß kann vorgesehen sein, zur Vorwärmung verwendetes Abgas nach Abzug aus dem Drehrohrofen und vor seiner Verwendung zur Vorwärmung zu kühlen, beispielsweise durch eine Eindüsung von Wasser in das Abgas. Bevorzugt kann vorgesehen sein, das Abgas auf eine Temperatur unter 800 °C oder unter 700 °C abzukühlen, bevor das Abgas zur Vorwärmung des Schüttgutes verwendet wird.

Es kann vorgesehen sein, dass das Schüttgut durch das Abgas auf eine Temperatur im Bereich von 100 bis 300 °C, insbesondere beispielsweise von 130 bis 200 °C vorgewärmt wird.

Ferner kann vorgesehen sein, dass der während der Durchführung des Verfahrens entstehende Staub aufgefangen wird, insbesondere in einer Entstaubungsanlage, und einer weiteren Verwendung zugeführt wird, zum Beispiel als Schlackenkonditionierer bei der Stahlproduktion.

EP 1 085 282 A1 beschreibt die übliche Technologie zur Herstellung von Zementklinkern in einem üblichen Drehrohrofen. Darüber hinaus wird in diesem Dokument die Recyclierung von Staub beschrieben, wobei aus dem Drehrohrofen abgezogenes Abgas durch Rückführung des Abgases in den Brennraum unter gleichzeitiger Zuführung eines Oxidans nachverbrannt wird.

Gegenstand der Erfindung ist auch eine Vorrichtung zur Behandlung von kohlenstoffhaltigen feuerfesten Erzeugnissen mit folgenden Merkmalen:
einem Drehrohrofen, dem kohlenstoffhaltige feuerfeste Erzeugnissen in Form von Schüttgut zuführbar sind;
Mitteln zur Beaufschlagung des Drehrohrofens mit Temperatur;
Mitteln zur Beaufschlagung des Drehrohrofens mit einem sauerstoffhaltigen Gas;
wobei die Vorrichtung die weiteren Mittel gemäß Anspruch 7 aufweist.

Die Vorrichtung kann insbesondere derart ausgebildet sein, dass durch diese das erfindungsgemäße Verfahren ausführbar ist.

Die Mittel der erfindungsgemäßen Vorrichtung können derart ausgebildet sein, dass durch diese das erfindungsgemäße Verfahren durchführbar ist.

Weitere Merkmale der Erfindung ergeben sich aus den Ansprüchen, den Figuren sowie der zugehörigen Figurenbeschreibung.

Sämtliche der zur Erfindung hierin offenbarten Merkmale können, einzeln oder in Kombination, beliebig miteinander kombiniert sein.

Ein Ausführungsbeispiel der Erfindung wird nachfolgend, auch anhand der Figuren, näher beschrieben.

Dabei zeigt
- Figur 1: eine Schemazeichnung einer erfindungsgemäßen Vorrichtung und
- Figur 2: eine Schnittansicht durch die Vorrichtung gemäß Figur 1 entlang der Schnittlinie A-A.

Gegenstand des Ausführungsbeispiels ist eine erfindungsgemäße Vorrichtung, mittels derer das erfindungsgemäße Verfahren durchgeführt wird. Durch das Verfahren gemäß dem Ausführungsbeispiel wird ein kohlenstoffhaltiges feuerfestes Erzeugnis in Form von MgO-C-Steinen als Ausbruchmaterial aus der Pfanne eines Stahlwerkes behandelt.

Dieses Ausbruchmaterial wird in Form von Schüttgut mit einer Korngröße im Bereich von größer 0 bis 10 mm zur Verfügung gestellt. Das Schüttgut wies vor seiner Behandlung durch das erfindungsgemäße Verfahren einen Anteil an MgO von etwa 82 Masse-% und einen Anteil an Kohlenstoff von etwa 10 Masse-% auf. Weitere Bestandteile waren unter anderem metallisches Aluminium, Aluminiumcarbid und Alumiumnitrid neben weiteren Bestandteilen in Form von Verunreinigungen, insbesondere in Form von CaO, Fe₂O₃ und SiO₂.

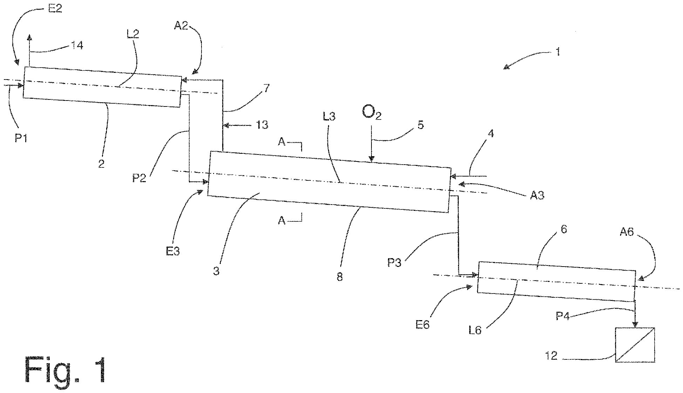

Das entsprechende Schüttgut wurde zur Behandlung durch das erfindungsgemäße Verfahren einer erfindungsgemäßen, in Figur 1 schematisch dargestellten Vorrichtung zugeführt.

Die Vorrichtung 1 zur Behandlung dieses Schüttgutes umfasst einen Drehrohrtrockner 2, einen Drehrohrofen 3, Mitteln 4 zur Beaufschlagung des Drehrohrofens 3 mit Temperatur, Mitteln 5 zur Beaufschlagung des Drehrohrofens 3 mit sauerstoffhaltigem Gas sowie ein Kühlaggregat 6.

Das Schüttgut wird zur Durchführung des erfindungsgemäßen Verfahrens zunächst, angedeutet durch den Pfeil P1, dem Drehrohrtrockner 2 zugeführt. Der Drehrohrtrockner 2 ist um seine Mittenlängsachse L2 drehbar, wobei die Mittenlängsachse L2 vom Einlass E2 zum Auslass A2 des Drehrohrtrockners 2 leicht abfällt. Durch die Rotation des Drehrohrtrockners 2 um seine Mittenlängsachse L2 gelangt das am Einlass E2 in den Drehrohrtrockner 2 eingeleitete Schüttgut selbsttätig zum Auslass A2 des Drehrohrwärmers 2. Während seines Transportes durch den Drehrohrtrockner 2 wird das Schüttgut durch aus dem Drehrohrofen 3 abgezogenes Abgas, angedeutet durch den Pfeil 7, auf eine Temperatur im Bereich von etwa 150 bis 180 °C vorgewärmt.

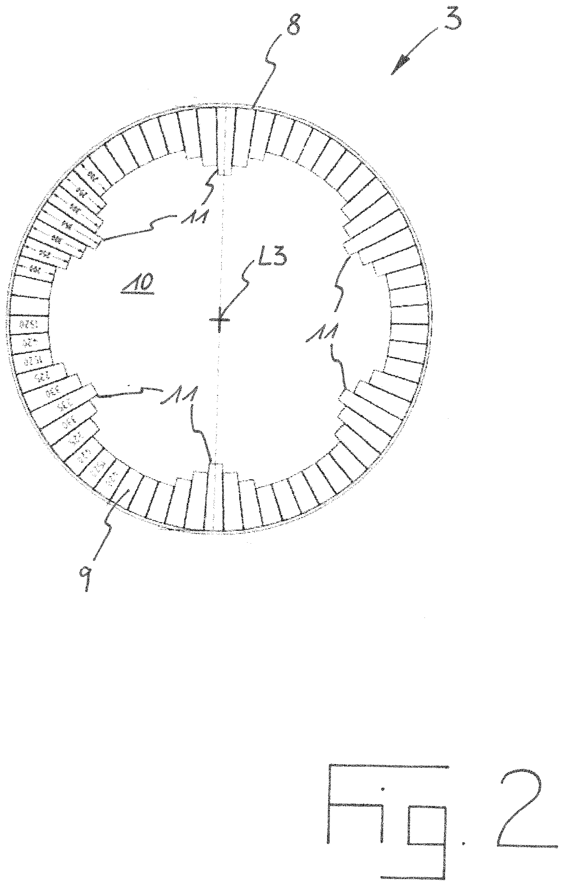

Das entsprechend vorgewärmte Schüttgut wird anschließend aus dem Auslass A2 des Drehrohrtrockners 2 ausgeleitet und dem Drehrohrofen 3, angedeutet durch den Pfeil P2, zugeführt. Dabei rieselt das Schüttgut schwerkraftbedingt vom Auslass A2 des Drehrohrtrockners 2 in den Einlass E3 des Drehrohrofens 3. Der Drehrohrofen 3 weist im wesentlichen den Grundaufbau eines Drehrohrofens auf. Insoweit umfasst der Drehrohrofen 3 einen rohrförmigen Metallmantel 8, der um eine leicht schräg zur Horizontalen geneigte Mittenlängsachse L3, die vom Einlass E3 zum Auslass A3 des Drehrohrofens 3 abfällt, drehbar ist. Auf seiner Innenseite weist der Metallmantel 8 des Drehrohrofens 3 eine feuerfeste Auskleidung 9 (siehe Figur 2) auf, die den Ofenraum 10 (siehe Figur 2) umschließt. Während der Behandlung des Schüttgutes im Ofenraum 10 wird der Drehrohrofen 3 um seine Mittenlängsachse L3 gedreht, so dass sich das Schüttgut selbsttätig vom Einlass E3 zum Auslass A3 des Drehrohrofens 3 bewegt.

Durch ein Mittel zur Beaufschlagung des Drehrohrofens 3 mit Temperatur in Form eines Ölbrenners 4 wird der Ofenraum 10 des Drehrohrofens 3 mit Temperatur beaufschlagt. Dabei funktioniert der Drehrohrofen 3 nach dem Gegenstromprinzip, wobei der Brenner 4 im Bereich des Auslasses A3 des Drehrohofens 3 angeordnet ist und die heißen Gase den Ofenraum 10 vom Auslass A3 in Richtung Einlass E3 durchströmen und im Bereich des Einlasses E3 aus dem Drehrohrofen 3 abgezogen werden. Die abgezogenen Abgase werden, angedeutet durch den Pfeil 7, anschließend dem Auslass A2 des Drehrohrtrockners 2 zugeführt, den sie zur Vorwärmung des darin befindlichen Schüttgutes durchströmen und anschließend im Bereich des Einlasses E2 des Drehrohrtrockners 2 aus diesem abgezogen werden, angedeutet durch den Pfeil 14. Das abgezogene Abgas wird in einer Entstaubungsanlage entstaubt. Dabei erhält man eine Feinfraktion mit einer Korngröße unter 0,5 mm. Nach dem Abzug des Abgases 7 aus dem Drehrohrofen 3 und vor dessen Einleitung in den Drehrohrwärmer 2 wird das Abgas 7 durch Wassereindüsung, angedeutet durch den Pfeil 13, auf eine Temperatur im Bereich von etwa 650 bis 700 °C gekühlt.

Durch den Brenner 4 ist das im Ofenraum 10 befindliche Schüttgut mit einer solchen Temperatur beaufschlagbar, dass eine Oxidation des Kohlenstoffs des Schüttgutes in Form einer exothermen Reaktion initiiert wird. Durch diese Oxidation des Kohlenstoffs in Form einer exothermen Reaktion wird eine solche Wärme freigesetzt, dass das Schüttgut im Ofenraum 10 mit einer Temperatur im Bereich von 1.200 bis 1.400 °C beaufschlagt wird. Gleichzeitig wird durch Mittel zur Beaufschlagung des Drehrohrofens 3 mit einem sauerstoffhaltigem Gas in Form einer Sauerstoffeindüsung 5 Sauerstoffgas in den Ofenraum 10 eingedüst. Durch diese gleichzeitige Beaufschlagung des Schüttgutes mit Temperatur und Sauerstoffgas werden die oxidierbaren Bestandteile des Schüttgutes weitgehend oxidiert. Die Oxidierung dieser oxidierbaren Bestandteile des Schüttgutes wird weiter dadurch verbessert, dass das Schüttgut während seines Transportes durch den Drehrohrofen 3 fortwährend gemischt und zerkleinert wird. Diese Vermischung und Zerkleinerung des Schüttgutes ist dadurch verbessert, dass die feuerfeste Ausmauerung 9 (siehe Figur 2) des Drehrohrofens 3 auf ihrer dem Ofenraum 10 zugewandten Seite längliche Vorsprünge 11 aufweist, die sich in Richtung der Mittenlängsachse L3 des Drehrohrofens 3 erstrecken.

Figur 2 zeigt eine Schnittansicht des Drehrohrofens 3 entlang der Schnittlinie A-A gemäß Figur 1.

Figur 2 lässt den rohrförmigen Metallmantel 8 des Drehrohrofens 3 erkennen, der auf seiner Innenseite eine feuerfeste Ausmauerung 9 aufweist, die den Ofenraum 10 umschließt. Die länglichen Vorsprünge der Ausmauerung 9, die sich in Richtung der Mittenlängsachse L3 des Drehrohrofens 3 erstrecken, sind mit dem Bezugszeichen 11 gekennzeichnet.

Das entsprechend behandelte Schüttgut verlässt den Drehrohrofen 3 am Auslass A3 des Drehrohrofens 3 und rieselt schwerkraftbedingt, angedeutet durch den Pfeil P3, in den Einlass E6 des Kühlaggregates 6.

Bei dem Kühlaggregat 6 handelt es sich um ein Kühlrohr, das um seine Mittenlängsachse L6 drehbar ist. Die Mittellängsachse L6 ist dabei leicht abfallend vom Einlass E6 des Kühlrohres 6 zum Auslass A6 des Kühlrohres 6 geneigt. Hierdurch wird in das Kühlrohr 6 eingeleitetes Schüttgut durch eine Drehung des Kühlrohres 6 selbsttätig von der Einlassseite E6 zur Auslassseite A6 des Kühlrohres 6 bewegt. In das Kühlrohr 6 wird Luft zur Kühlung des Schüttgutes 6 eingeleitet. Das in Kühlrohr 6 entsprechend gekühlte Schüttgut wird dem Kühlrohr 6 am Auslass A6 des Kühlrohres 6 entnommen, angedeutet durch den Pfeil P4. Das Schüttgut weist eine Korngröße von > 0 bis 6 mm auf. Möglich wäre eine anschließende Fraktionierung in eine Grob- und eine Feinfraktion und bei einer Korngrenze von beispielsweise 0,5 mm, angedeutet durch das Bezugszeichen 12.

Das entnommene Schüttgut wies einen Anteil an MgO von 93 Masse-% und an Kohlenstoff von 0,4 Masse-% auf. Ein solches Produkt eignet sich hervorragend zur Verwendung als Rohstoff in einem Versatz zur Herstellung von feuerfesten Erzeugnissen.

## Patentansprüche

1. Verfahren zur Behandlung von kohlenstoffhaltigen feuerfesten Erzeugnissen mit folgenden Merkmalen:
1.1 Zur Verfügungstellung von kohlenstoffhaltigen feuerfesten Erzeugnissen in Form von Schüttgut;
1.2 Zuführen des Schüttgutes in einen Drehrohrofen;
1.3 Beaufschlagung des Schüttgutes im Drehrohrofen mit Temperatur und einem sauerstoffhaltigen Gas derart, dass es zumindest zu einer teilweisen Oxidation von in dem Schüttgut enthaltenden, oxidierbaren Bestandteilen kommt;
1.4 Ausführen des Schüttgutes aus dem Drehrohrofen.

2. Verfahren nach Anspruch 1 zur Behandlung von kohlenstoffhaltigen feuerfesten Erzeugnissen, die neben Kohlenstoff wenigstens einen der folgenden, oxidierbaren Bestandteile enthalten: wenigstens ein Metall, wenigstens ein Carbid, wenigstens ein Nitrid oder wenigstens ein Carbonitrid.

3. Verfahren nach wenigstens einem der vorhergehenden Ansprüche, bei dem das kohlenstoffhaltige feuerfeste Erzeugnis derart in Form von Schüttgut zur Verfügung gestellt wird, dass dieses zu wenigstens 80 Masse-% in einer Korngröße unter 20 mm vorliegt.

4. Verfahren nach wenigstens einem der vorhergehenden Ansprüche, bei dem das Schüttgut im Drehrohrofen mit Temperaturen im Bereich von 500 bis 1.600 °C beaufschlagt wird.

5. Verfahren nach wenigstens einem der vorhergehenden Ansprüche, bei dem das Schüttgut während der Beaufschlagung im Drehrohrofen mit Temperatur und einem sauerstoffhaltigen Gas gemischt und zerkleinert wird.

6. Verfahren nach wenigstens einem der vorhergehenden Ansprüche, bei dem das Schüttgut im Drehrohrofen mit sauerstoffhaltigem Gas in Form Sauerstoff beaufschlagt wird.

7. Vorrichtung zur Behandlung von kohlenstoffhaltigen feuerfesten Erzeugnissen mit folgenden Merkmalen:
7.1 Einem Drehrohrofen (3), dem kohlenstoffhaltige feuerfeste Erzeugnisse in Form von Schüttgut zuführbar sind;
7.2 Mitteln (4) zur Beaufschlagung des Drehrohrofens (3) mit Temperatur;
7.3 Mitteln (5) zur Beaufschlagung des Drehrohrofens (3) mit einem sauerstoffhaltigen Gas; wobei
7.4 der Ofenraum Mittel aufweist, durch die das Schüttgut während der Rotation des Drehrohrofens zerkleinerbar ist.

## Claims

1. A method for the treatment of carbonaceous refractory products, with the following features:
1.1 provision of carbonaceous refractory products in the form of bulk material;
1.2 supply of the bulk material into a rotary kiln;
1.3 application of temperature and an oxygenous gas to the bulk material in the rotary kiln, such that at least partial oxidation of the oxidisable components contained in the bulk material takes place;
1.4 removal of the bulk material from the rotary kiln.

2. The method in accordance with claim 1 for the treatment of carbonaceous refractory products,
which in addition to carbon contain at least one of the following oxidisable components: at least one metal, at least one carbide, at least one nitride, or at least one carbonitride.

3. The method in accordance with at least one of the preceding claims,
in which the carbonaceous refractory product is provided in the form of bulk material, such that the latter is present to at least 80% by mass, with a grain size of less than 20 mm.

4. The method in accordance with at least one of the preceding claims,
in which temperatures in the range from 500 to 1,600°C are-applied to the bulk material in the rotary kiln.

5. The method in accordance with at least one of the preceding claims,
in which, during the application of temperature and an oxygenous gas to the bulk material in the rotary kiln, the bulk material is mixed and reduced in size.

6. The method in accordance with at least one of the preceding claims,
in which oxygenous gas in the form of oxygen is applied to the bulk material in the rotary kiln.

7. A device for the treatment of carbonaceous refractory products, with the following features:
7.1 a rotary kiln (3) to which carbonaceous refractory products in the form of bulk material can be supplied;
7.2 means (4) for applying temperature to the rotary kiln (3);
7.3 means (5) for applying an oxygenous gas to the rotary kiln (3); wherein
7.4 the kiln chamber has means by which the bulk material can be reduced in size during the rotation of the rotary kiln.

## Revendications

1. Procédé pour le traitement de produits réfractaires contenant du carbone, avec les caractéristiques suivantes :
1.1 mise à disposition de produits réfractaires contenant du carbone, sous la forme d'un produit en vrac ;
1.2 alimentation du produit en vrac dans un four tubulaire rotatif ;
1.3 exposition du produit en vrac dans le four tubulaire rotatif à une température et un gaz contenant de l'oxygène, de manière à obtenir une oxydation au moins partielle de composants oxydables contenus dans le produit en vrac ;
1.4 sortie du produit en vrac hors du four tubulaire rotatif.

2. Procédé selon la revendication 1, pour le traitement de produits réfractaires contenant du carbone contenant au moins l'un des composants oxydables suivants, en plus du carbone : au moins un métal, au moins un carbure, au moins un nitrure ou au moins un carbonitrure.

3. Procédé selon l'une au moins des revendications précédentes, dans lequel le produits réfractaires contenant du carbone est mis à disposition de telle façon sous la forme d'un produit en vrac, que celui-ci présente une taille de grain inférieure à 20 mm pour au moins 80% en masse.

4. Procédé selon l'une au moins des revendications précédentes, dans lequel le produit en vrac dans le four tubulaire rotatif est soumis à une température comprise entre 500 et 1600°C.

5. Procédé selon l'une au moins des revendications précédentes, dans lequel le produit en vrac est mélangé et fractionné pendant l'exposition à une température et un gaz contenant de l'oxygène dans le four tubulaire rotatif.

6. Procédé selon l'une au moins des revendications précédentes, dans lequel le produit en vrac est exposé à un gaz contenant de l'oxygène sous forme d'oxygène dans le four tubulaire rotatif.

7. Dispositif pour le traitement de produits réfractaires contenant du carbone, avec les caractéristiques suivantes :
7.1 un four tubulaire rotatif (3), vers lequel sont alimentés des produits réfractaires contenant du carbone sous la forme d'un produit en vrac ;
7.2 des moyens (4) permettant d'exposer le four tubulaire rotatif (3) à une température ;
7.3 des moyens (5) permettant d'exposer le four tubulaire rotatif (3) à un gaz contenant de l'oxygène ; dans lequel
7.4 l'enceinte du four comporte des moyens permettant de fractionner le produit en vrac pendant la rotation du four tubulaire rotatif.
